# EUROPEAN PATENT APPLICATION

(11) **EP 1 517 484 A1**
(43) Date of publication of application: **23.03.2005**
(21) Application number: 03020961.3
(22) Date of filing: 16.09.2003
(51) Int. Cl.: H04L 12/56

(54) **Method and apparatus for traffic scheduling**

(71) Applicant: SIEMENS AKTIENGESELLSCHAFT, 80333 München (DE)
(72) Inventor: Alves, Pedro Alexandre, 2745-316 Queluz (PT); Nunes, Pedro, 2795-016 Linda-a-Velha (PT); Santos, Francisco, 1350-272 Lisboa (PT)

(57) **Abstract**

The invention relates to an optimized method and apparatus (100) for scheduling of transmit information in a communications device. Modern communications networks generally carry two types of traffic or data, user traffic and management traffic. Management traffic is generally given a higher priority in today's networks for improved network management. A disadvantage of simply assigning a high priority to management traffic is that user traffic experiences delays and even data loss, requiring time consuming retransmissions. According to the present invention there is provided a method for scheduling traffic for transmission over a transmission medium (112), wherein user traffic is received in a first queue (102), management traffic is received in a second queue (104), a high priority is assigned to management traffic and a low priority is assigned to user traffic if a fill level of the first queue (102) is smaller than or equal to a predetermined threshold, and a low priority is assigned to management traffic and a high priority is assigned to user traffic if the fill level of the first queue is greater than said predetermined threshold.

## Description

The present invention relates to an optimized method and apparatus for scheduling transmit information in a communications device.

Modern communications networks generally carry two types of traffic or data. The first is the traffic which is transmitted by or delivered to a user or customer, and which is usually paid for by the user. That type of traffic is widely known as user traffic or customer traffic. The second is the traffic caused by network management applications in sending and receiving management data from network elements, known as management traffic.

The management information conveyed in the management traffic is generally considered important. For example, if network congestion is imminent for a specific node, management information can be used to first inform a network management application. Then, the network management application may transmit throttle commands to all nodes linked with the congested node, in response to which these nodes reduce the amount of traffic transmitted to the congested node to allow for congestion abatement.

For improved network management, therefore, management information is generally assigned a higher priority in today's networks. A disadvantage of simply assigning a high priority to management traffic is that user traffic, having a lower priority and sharing the available bandwidth with management traffic, may experience delays and even data loss. Such data loss is typically not admissible. In other implementations, data loss would entail time consuming retransmissions.

Previous attempts to overcome that disadvantage include:
- providing a separate channel or exclusively allocating bandwidth for management traffic, or, in general terms, providing out-of-band management traffic,
- providing means to store user data until the transmission of higher priority management data is completed, and
- assigning a high priority to user traffic and a low priority to management traffic, to the effect that management traffic is delayed and may be lost.

Clearly, none of these approaches solve the underlying problem satisfactorily. Providing a separate channel or bandwidth, while effectively stopping management traffic from interfering with user traffic, would drastically increase equipment cost and the overall cost of deployment as in many cases new physical connections would be required.

Likewise, providing means to store user data, for example in large buffers, together with the then necessary more sophisticated buffer management, would increase equipment cost and further add to sporadic delays in user traffic, increasing the jitter experienced by the user traffic, which might render the user channel unusable for certain user applications such as voice.

The loss of management traffic or increased delays for management traffic resulting from assigning a high priority to user traffic and a low priority to management traffic could render the entire network unusable. In the above example, if the network is congested only from user traffic, high priority user traffic would then prevent management traffic from reaching its destination, eventually resulting in a collapse of the affected network section(s).

It is, therefore, an object of the present invention to provide an optimized method for traffic scheduling.

It is another object of the present invention to provide an apparatus for traffic scheduling.

In accordance with the foregoing objectives, there is provided by the invention a method for scheduling traffic for transmission over a transmission medium, comprising the steps of:
- receiving first traffic in a first queue,
- receiving second traffic in a second queue,
- assigning a high priority to the second traffic and a low priority to the first traffic if a fill level of the first queue is smaller than or equal to a predetermined threshold, and
- assigning a low priority to the second traffic and a high priority to the first traffic if the fill level of the first queue is greater than said predetermined threshold.

Assigning the priorities may in one preferred embodiment comprise:
- in a control circuit, obtaining the fill level of the first queue,
- comparing the fill level to the predetermined threshold by means of the control circuit,
- generating a control signal by the control circuit, and
- providing said control signal to a selecting device for selective coupling of traffic from the first and second queues to a transmit interface in accordance with said priorities for the first and second traffic.

In accordance with the present invention there is also provided an apparatus for scheduling traffic for transmission over a transmission medium, comprising:
- a first queue for receiving first traffic,
- a second queue for receiving second traffic,
- means for assigning priorities to the first and second traffic, the means for assigning priorities configured for assigning a high priority to the second traffic and a low priority to the first traffic if a fill level of the first queue is smaller than or equal to a predetermined threshold and for assigning a low priority to the second traffic and a high priority to the first traffic if the fill level of the first queue is greater than said predetermined threshold.

The means for assigning priorities according to one embodiment of the invention may comprise:
- a control circuit,
- storage means for storing said predetermined threshold,
- a selecting device,
- wherein the control circuit is configured for obtaining the fill level of the first queue, for then comparing the fill level to the predetermined threshold obtained from the storage means, for then generating a control signal and providing said control signal to the selecting device for selective coupling of traffic from the first and second queues to a transmit interface in accordance with said priorities for the first and second traffic.

The present invention has several advantages. One advantage of the invention is that the first traffic is assigned a higher priority over the second traffic if the fill level of the first queue indicates that the received first traffic exceeds the amount of first traffic transmitted over the transmission medium, which in turn indicates that the second traffic is blocking the first traffic in an undesired fashion.

If conditions return to normal, as indicated by a low fill level of the first queue, the original priorities are restored in that the second traffic is assigned a higher priority over the first traffic.

In a scenario where the first traffic represents user traffic and the second traffic represents management traffic, the invention, in comparison to previous arrangements, advantageously achieves a reduced delay and a decreased loss rate for the user traffic for periods with a high load while requiring only minimal changes to existing designs which have no noteworthy effect on the overall cost. Moreover, during periods with normal system load, a system designed in accordance with the present invention allows for prioritization of management traffic over user traffic to ensure network operability and manageability.

It is a further advantage of the invention that in order to assign the priorities no analysis on any protocol element or header is necessary, allowing for cost-effective design, which may, for example, be accomplished by means of a single integrated circuit which is of the same low complexity as any previous circuit assigning fixed priorities.

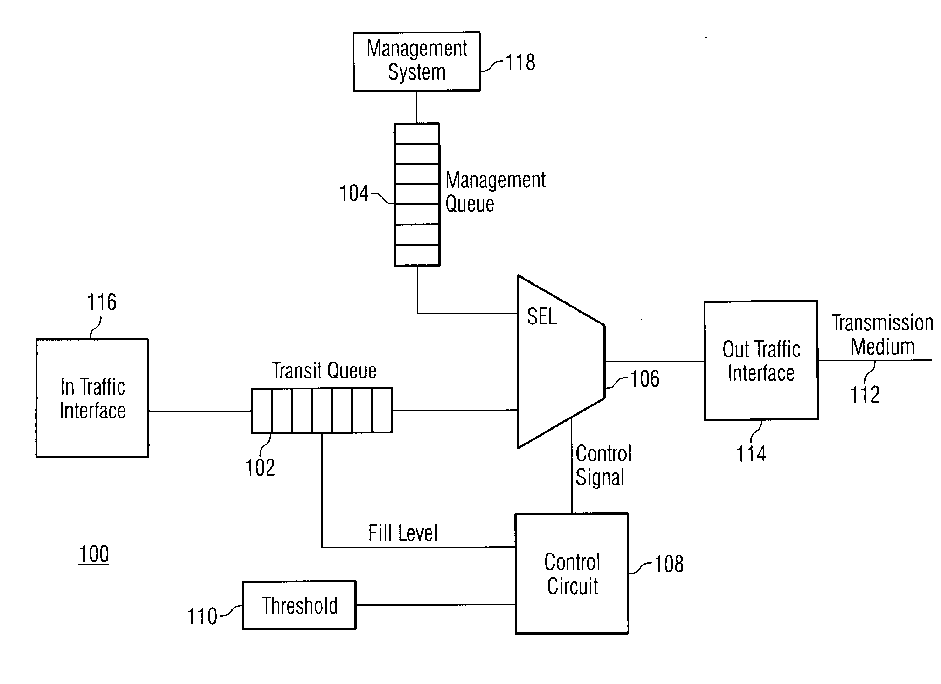

In the following, the invention will be described in more detail in the form of an embodiment which is better understood in accordance with the enclosed figure.

The figure shows an exemplary embodiment of the present invention. In the figure, there is shown an apparatus 100 which is part of the transmit section of an arbitrary network element. User traffic is received by means of a first queue or transit queue 102 from some type of user traffic source 116 such as an in-traffic interface if the network element is a repeater. Other user traffic sources 116 include processors, data storage or memory devices, peripheral devices etc.

The network element also comprises a management system 118 which feeds management traffic into a second queue or management queue 104. Both transit and management queues 102, 104 are connected to a selecting device 106 which in response to control information selectively couples traffic from either the transit or the management queue to a transmit interface 114, which in turn couples the selected traffic portion to a transmission medium 112, which can be any wired or wireless transmission medium.

Transit queue 102 and selecting device 106 are both coupled to a control circuit 108 which receives an indication representing the fill level from transit queue 102 and provides control information to selecting device 106. Control circuit 108 further comprises or is connected to storage means 110 for storing a threshold value.

It should be noted that it is not necessary to provide for a separate control circuit 108 as depicted. It is also possible to implement control either within selecting device 106 or transit queue 102 for higher circuit integration. As a further step, both the transit and the management queues may be implemented within selecting device 106, providing for an integrated circuit comprising the following elements and their interconnections: transit queue 102, management queue 104, selecting device 106, control circuit 108 and memory 110.

Under normal operating conditions, that is, both the user and the management traffic combined do not exceed the transport capacity of transmit interface 114 and/or transmission medium 112, the management traffic will be conveyed with a higher priority than the user traffic.

As an example it is assumed that management traffic is assigned twice the priority of user traffic under normal operating conditions. Consequently, two out of three messages selected for transmission will be management messages, provided that both management and user messages are available for transmission.

There are numerous embodiments of the invention providing useful combinations of control 108 and selecting device 106 to effect a higher priority for management traffic over user traffic.

Embodiments of a first preferred group each comprise a selecting device 106 in the form of a multiplexer and a control circuit 108, wherein the control circuit 108 is configured to control the selection of each message to be transmitted from either queue. Control for selecting device 106 from control circuit 108 is continuous for these first embodiments.

In a second preferred group of embodiments there is provided an advanced selecting device 106 which can be programmed by means of control signals to autonomously convey messages from two or more queues according to different priorities associated with those queues. Control circuit 108 exercises control by programming the advanced selecting device 106 in accordance with the current load situation. Generally, for these second embodiments control signals from control circuit 108 are sent to selecting device 106 only upon changes in the load situation that require a re-association of queue priorities.

According to the invention, different queue priorities are applied if the fill level of transit queue 102 is greater than the threshold stored in memory 110, indicating that received user traffic was in excess of the amount of user traffic that could be conveyed by selecting device 106.

The increased fill level in transit queue 102 may be caused by several events alone or by a combination thereof. A first event may be increased user traffic. A second event may be increased management traffic. A third event may be an increased error rate on the transmission medium, leading to a reduced transmission rate of transmit interface 114.

To avoid loss of user traffic in any of these events, user traffic is assigned a higher priority as long as the fill level of transit queue 102 is in excess of the threshold value.

In the above example, the priorities could simply be swapped such that user traffic is assigned twice the priority of management traffic. Therefore, as long as it is determined by evaluating the fill level of transit queue 102 that the system is in high load condition, two out of three messages conveyed by selecting device 106 will be user messages, when management messages are available for transmission.

In the second preferred group of embodiments having an advanced selecting device 106 it may be of further advantage to assign a fixed priority ratio, first_queue:second_queue=2:1 in the example, which in response to receiving the control signal is simply inverted to first_queue:second_queue=1:2. Then the control signal "programming" the selecting device 106 could comprise a binary signal indicating either normal or high load conditions, further reducing the overall complexity of the apparatus. Additionally, it is possible to utilize a transit queue 102 that has the ability to autonomously detect a fill level in excess of the threshold and to create a control signal for advanced selecting device 106 correspondingly. To further reduce cost the threshold may be a hard-wired threshold such that the control signal is created if the n^{th} position in transit queue 102 is occupied, where n represents the threshold.

While in the above example a priority ratio of 1:2 or 2:1 depending on the load condition was used to illustrate the invention, other ratios may well be chosen. In yet another embodiment it may be desirable to assign a strict priority to the currently selected traffic, either management traffic or user traffic. In that embodiment, any management traffic would be sent immediately as long as the system is in normal load condition, while during high load the management traffic would be blocked entirely. [0]To avoid unfavorable conditions that might result from blocking and therefore delaying management traffic, the management layer or the control circuit could be adapted to let management traffic pass if, for example, the delay experienced by management traffic exceeds a predetermined amount.

The present invention is particularly useful for Ethernet transmitters. Ethernet transmitters and receivers are traditionally devices of low complexity and high cost efficiency compared to other transmitters and receivers such as those used for ATM networks or traditional telecommunications networks. The present invention preserves these advantages by modifying the priority multiplexer and adding a low-complexity multiplexer control while achieving a lower user traffic loss rate and lower user traffic delay under high load conditions.

Additionally, the present invention is particularly useful in an environment where a communications provider installs provider managed Ethernet equipment on the customer premises and where management traffic, while important for managing of said equipment, must not interfere with user traffic.

While the various aspects of the invention have been described with respect to user traffic and management traffic, it shall be appreciated that the scope of the invention is not limited thereto, but may, for example, be applied to any transmitter designed for combining traffic from more than one traffic source. Also, while the invention has been described with reference to two traffic sources, the teachings of the present invention can be extended by any skilled person to any number of traffic sources without departing from the spirit of the invention.

## Claims

1. A method for scheduling traffic for transmission over a transmission medium (112), comprising the steps of:
- receiving first traffic in a first queue (102),
- receiving second traffic in a second queue (104),
- assigning a high priority to the second traffic and a low priority to the first traffic if a fill level of the first queue (102) is smaller than or equal to a predetermined threshold, and
- assigning a low priority to the second traffic and a high priority to the first traffic if the fill level of the first queue (102) is greater than said predetermined threshold.

2. The method according to claim 1, wherein the steps of assigning priorities comprise:
- in a control circuit (108), obtaining the fill level of the first queue (102),
- comparing the fill level to the predetermined threshold by means of the control circuit (108),
- generating a control signal by the control circuit (108), and
- providing said control signal to a selecting device (106) for selective coupling of traffic from the first and second queues (102, 104) to a transmit interface (114) in accordance with said priorities for the first and second traffic.

3. The method according to any of the claims 1 or 2, wherein said first traffic comprises user traffic.

4. The method according to any of the claims 1 to 3, wherein said second traffic comprises management traffic.

5. An apparatus (100) for scheduling traffic for transmission over a transmission medium (112), comprising:
- a first queue (102) for receiving first traffic,
- a second queue (104) for receiving second traffic,
- means for assigning priorities to the first and second traffic, the means for assigning priorities configured for assigning a high priority to the second traffic and a low priority to the first traffic if a fill level of the first queue (102) is smaller than or equal to a predetermined threshold and for assigning a low priority to the second traffic and a high priority to the first traffic if the fill level of the first queue (102) is greater than said predetermined threshold.

6. The apparatus (100) according to claim 5, wherein said means for assigning priorities comprise:
- a control circuit (108),
- storage means (110) for storing said predetermined threshold,
- a selecting device (106),
- wherein the control circuit (108) is configured for obtaining the fill level of the first queue (102), for then comparing the fill level to the predetermined threshold obtained from the storage means (110), for then generating a control signal and providing said control signal to the selecting device (106) for selective coupling of traffic from the first and second queues (102, 104) to a transmit interface (114) in accordance with said priorities for the first and second traffic.

7. The apparatus according to claim 6, wherein the selecting device (106) comprises a multiplexer.

8. The apparatus according to claim 6, wherein the control circuit (108), the storage means (110) and the selecting device (106) are implemented in the form of a single integrated circuit.

9. The apparatus according to claim 8, wherein said single integrated circuit further comprises said first and second queues (102, 104).
